# EUROPEAN PATENT SPECIFICATION

(11) **EP 1 496 314 B1**
(45) Date of publication and mention of the grant of the patent: **12.07.2006**
(21) Application number: 04254043.5
(22) Date of filing: 06.07.2004
(51) Int. Cl.: F24F 6/02, F24F 11/00

(54) **Humidification system with reverse osmosis filter**
Belüftungssystem mit einem Umkehrosmose-Filtereinsatz
Systeme de humidification a filtre a osmose inverse

(30) Priority: 07.07.2003 GB 0315873
(43) Date of publication of application: 12.01.2005
(73) Proprietor: EATON-WILLIAMS GROUP LIMITED, Edenbridge, Kent TN8 6EG (GB)
(72) Inventor: Watts, Robert John, Crowborough, TN6 1SW East Sussex (GB)
(74) Representative: Crouch, David John

(56) References cited:
- EP-A- 1 240 938
- WO-A-00/10695
- US-A- 6 092 794
- US-B1- 6 375 849
- PATENT ABSTRACTS OF JAPAN vol. 1998, no. 03, 27 February 1998 (1998-02-27) & JP 09 299944 A (JAPAN ORGANO CO LTD), 25 November 1997 (1997-11-25)

## Description

The present invention relates to a humidification system comprising at least one steam humidifier unit connected to a reverse osmosis unit so as to receive processed water therefrom. This reduces the extent to which scaling up occurs in the humidifier unit.

Another humidification system, using pressurized air for the generation of fog, is disclosed in US-6092794-B.

Such a system as has been proposed hitherto has included a reservoir tank into which the reverse osmosis unit feeds processed water, and from which the or each steam humidifier unit draws water as required.

A disadvantage of such a previously proposed system is the need for the reservoir tank and associated pipe work all of which must be made of inert and relatively expensive steel and which must be maintained to ensure that the water is not contaminated subsequent to its being processed by the reverse osmosis unit.

The present invention seeks to provide a remedy.

Accordingly, the present invention is directed to a humidification system comprising at least one steam humidifier unit connected to a reverse osmosis unit of the system so as to receive processed water therefrom when in use, and control circuitry connected to a water-required signal generator of the steam humidifier unit to receive a signal therefrom indicative of the need for water to be fed to the steam humidifier unit, the control circuitry also being connected to the reverse osmosis unit to issue a start-up signal upon receipt of such a water-required signal so as to cause the reverse osmosis unit to start operating, the latter being provided with a readiness signal generator connected to the control circuit to send a readiness signal thereto once the reverse osmosis unit has become ready to provide adequately processed water, the control circuitry also being connected to at least one feed valve of the system to switch that valve so as to cause the processed water from the reverse osmosis unit to be fed to the humidifier unit upon receipt of such a readiness signal.

This provides the advantage that processed water is only produced by the reverse osmosis unit when it is required.

It is desirable further for the steam humidifier unit to be provided with a fill-complete signal generator constructed to issue a signal once the filling of the steam humidifier unit with processed water is complete, the control circuitry being connected to the fill-complete signal generator and constructed to issue a shut-down signal to the reverse osmosis unit upon receipt of such a fill-complete signal.

The system may comprise a plurality of steam humidifier units each connected to the reverse osmosis unit so as to receive processed water therefrom when in use, the reverse osmosis unit being started up upon issue of a water-required signal from any one or more of the humidifier units. In addition, the reverse osmosis unit may be shut down only when a fill-complete signal has been received from the or all the humidifiers which have last issued a water-required signal.

Preferably, the steam humidifier unit comprises a boiler tank, the said water-required signal generator comprising a float switch within the tank. This provides a relatively inexpensive method of producing steam, as well as a relatively simple method of detecting when the tank is approaching an empty condition.

Instead of a float switch, a different level sensor could be used, such as a pressure switch.

The present invention extends to a method of humidification using apparatus as set out in one or more of the six preceding paragraphs.

An example of a humidification system made in accordance with the present invention will now be described in greater detail with reference to the accompanying drawings, in which:
Figure 1 shows diagrammatically an elevational view of a steam humidifier unit together with control circuitry of the system; and
Figure 2 shows an hydraulic circuit diagram of a reverse osmosis unit of the system connected to the control circuitry shown in Figure 1.

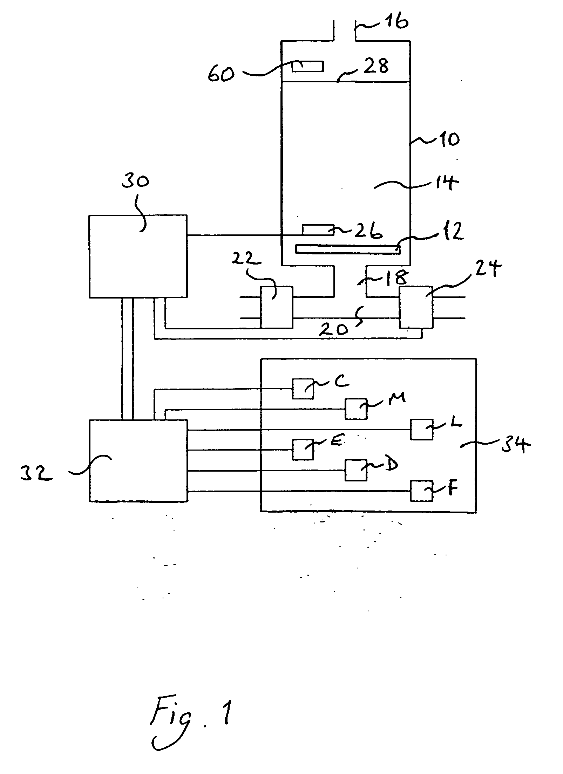

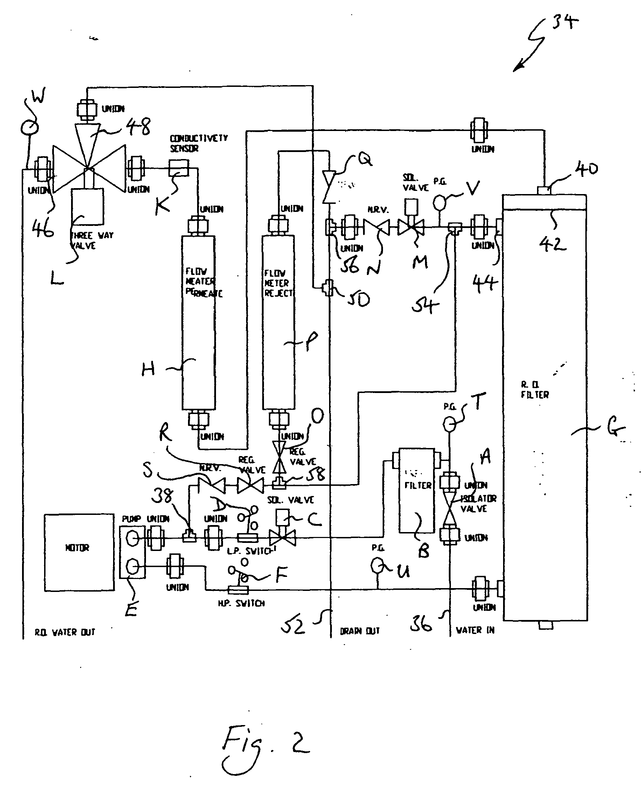

The humidification system shown in Figure 1 is an atmospheric humidifier system, meaning that its steam output is substantially at atmospheric pressure (steam pressures of from -2000 pascals to +2000 pascals relative to standard atmospheric pressure). It comprises an humidifier unit having a boiler tank 10 containing a water heater element 12 and water 14. At the top of the tank 10, there is a steam outlet 16 and, at the bottom of the tank, there is a water inlet 18. From the inlet 18, a pipe 20 extends in two opposite directions from a T-connection between the inlet 18 and the pipe 20. In one of those directions, the pipe 20 extends to a reverse osmosis unit shown in Figure 2 via a shut-off valve 22 and, in the opposite direction, the pipe 20 leads to a drain (not shown) via a shut-off valve 24. At a relatively low level in the tank interior 10, there is a float switch 26. The latter issues a signal when the water level 28 of the water 14 falls to a level below that switch 26.

A printed circuit board 30 of the humidifier unit is connected electrically to receive signals from the float switch 26 and to control the solenoid shut-off valves 22 and 24. The printed circuit board 30 is also connected to a printed circuit board 32 of a reverse osmosis unit 34 which includes solenoid valves C and M, as well as a three-way valve L and the motor of a pump E, to all of which the printed circuit board 32 is connected. It is also connected to receive signals from a low pressure switch D, a high pressure switch F. Pressure meters V, T and U, as well as a processed-water flowmeter H and a non-processed water flowmeter P, of the reverse osmosis unit 34, are present for indication and commissioning of the equipment.

The reverse osmosis unit is shown in greater detail in Figure 2. Thus, it is provided with a water inlet 36 connected to a water supply at a typical pressure of 2 to 10 bars. This inlet 36 is provided with an isolator valve A, which in turn is connected to a pre-filter B via the pressure meter T. Downstream of the pre-filter B and connected in series in the following order are the solenoid valve C, the low pressure switch D, a T-connection 38, a pump E, the high pressure switch F, the further pressure meter U, and a reverse osmosis filter G.

A first outlet 40 of the reverse osmosis filter G is located downstream of (but above) a membrane 42 of the reverse osmosis filter G so that water passing through this outlet 40 is processed water. A second outlet 44 is arranged adjacent to the membrane 42, but upstream thereof (and therefore below it in Figure 2), so that unprocessed water passes out through the outlet 44 after it has been passed over the upstream side of, although not through, the membrane 42. Continuing downstream from the outlet 40, there are connected in series in the following order, a flow meter H through which flows processed water or permeate, a conductivity sensor K, and the three-way valve L. A first outlet port 46 of the three-way valve L is connected to the pipe 20 shown in Figure 1 of the humidifier unit upstream of the solenoid shut-off valve 22. A second outlet port 48 of the three-way valve L is connected, via a T-connection 50, to a drain outlet 52.

Proceeding downstream from the outlet 44 of the reverse osmosis outlet G and connected in series in the following order are a T-junction 54, the solenoid valve M, a non-return valve N, and a further T-junction 56 connected to the drain outlet 52. Connected downstream of the T-junction 54 and in the following order, there are a further T-junction 58, a regulating valve R, and a non-return valve S, the downstream side of which is connected to the T-junction 38 between the low pressure switch D and the pump E. Extending from the T-junction 58 in a downstream direction and connected in the following order are a regulating valve O, a flow meter P which meters non-processed water, and a non-return valve Q connected on its downstream side to the drain outlet 52 via a T-junction 56.

When the system is operating with water in the tank 10, the heater 12 boils the water and steam exits through the outlet 16 to a location requiring humidification, in accordance with signals from a humidestat or a customers control. As the water 14 boils away, the level 28 falls until it is below the float switch 26. This then acts as a water-required signal generator issuing a signal to the printed circuit board 30 of the humidifier unit indicating the need for water to be fed to the tank 10 of the steam humidifier unit.

The printed circuit board 30 as a consequence issues a signal to the reverse osmosis printed circuit board 32, which in turn issues a number of signals, constituting a start-up signal to the reverse osmosis unit shown in Figure 2. This causes the reverse osmosis unit to start operating. To do this, with the isolator valve A having been previously opened, it opens the solenoid valve C and whilst ensuring the solenoid valve M is closed. After five seconds, provided the pressure at switch D is adequate, the motor of the pump E is switched on to cause water from the water supply to be drawn through the pre-filter B to remove particles from the water, through the low pressure switch, and thence to the reverse osmosis filter G via the high pressure switch F. The water is then passed through the reverse osmosis filter G and its membrane 42. A proportion of the water flowing into the reverse osmosis filter G passes through the outlet 40 as processed water or permeate through the flowmeter H to the valve L, and another portion of the water flows through the outlet 44 of the reverse osmosis filter G via the regulating valve O, the flow meter P and the non-return valve Q to the drain outlet 52. The pump E ensures an adequate pressure in the upstream side of the membrane 42 for efficiency. Some of this water flows through the regulating valve R to the T-junction 38 and back via the pump E to the reverse osmosis filter G. The relative proportion of the water flowing through the two outlets 40 and 44 is about the same. At this stage, the setting as determined by the printed circuit board 32 of the three-way valve L is such that water passes from the flowmeter H via the conductivity sensor K to the outlet port 48 of the three-way valve L ultimately to the drain outlet 52. Provided the conductivity sensor K does not send a signal to the printed circuit board 32 that is above a predetermined threshold value for a continuous period of thirty seconds, and provided the pressure meters T, U and V and flowmeters H and P indicate the required dynamic conditions, the three-way valve L is switched by the printed circuit board 32 to pass water to the or each relevant inlet 18 and the printed circuit board 30 issues a signal to the solenoid shut-off valve 22 to open it. Thus, processed water from the reverse osmosis unit G is passed into the tank 10 via the inlet 18 of the steam humidifier unit.

If the conductivity sensor issues a signal which is above the predetermined threshold level, the three-way valve L will combine to send processed water to the drain 52 until flushing of the reverse osmosis filter G reduces the conductivity to a satisfactory level.

The proportion of water flowing through the flowmeter P, as a percentage of the combined flow through flowmeters H and P, may be in the range from 10% to 100%, depending upon requirements and conditions.

It will be appreciated that the pressure meters T, U and V, with the flowmeters H and P, together constitute a readiness signal generator once the processed water starts to flow from the outlet 40 to the three-way valve L.

Whilst the illustrated embodiment shows only one humidifier unit, it will be appreciated that in practice there may be many such humidifier units connected to the reverse osmosis unit, with all the respective inlets 18 of the humidifier units being connected to the output port 46 of the three-way valve L of the reverse osmosis unit via respective shut-off valves 22. The printed circuit board 32 is then connected to each and every printed circuit board of the multiplicity of steam humidifier units to start up the reverse osmosis unit when any one or more of the steam humidifier units indicates a water requirement.

Preferably, the interior of the tank 10 is also provided with a second float switch 60 towards the top of the tank 10 so that when the level 28 exceeds the level of the float switch 20, the latter triggers a signal. With the float switch 60 connected to the printed circuit board 30, the latter then sends a signal to the printed circuit board 32 of the reverse osmosis unit to indicate that the tank 10 is full, and provided there is no outstanding fill requirement from one or more of the other humidifier units, the printed circuit board 32 will issue signals, to shut down the pump E and to switch the three-way valve L so that any water passing to it will be drained through the drain outlet 52. Five seconds later, a signal is issued by the board 32 to close the solenoid valve C.

Preferably, the shut down occurs after substantially one minute has passed from the time the last tank full signal is received, so that the reverse osmosis unit will not be shut-down if the next water-required signal is received by the circuit board 32 less than a minute after the last tank-full signal was issued.

Numerous variations and modifications to the illustrated circuitry may occur to the reader without taking the resulting construction outside the scope of the present invention. The control circuitry may be programmed to ensure an adequate amount of flushing of the reverse osmosis filter G when it is first used and thereafter when it is started up, and may cause periodic flushing in addition.

For each flushing, the valve L is set to drain, and the valves C and M are opened. Five seconds later, the pump E is started. Most of the water passes to drain via the outlet 44 at this stage. After a pre-selectable flush time, the pump E is stopped and five seconds later the solenoid valves C and M are closed. The pressure in the switches D and F are monitored for pressure fault conditions during this flushing sequence. The foregoing steps are effected by programmes stored with the control circuitry 30 and 32.

The circuitry 30 and 32 also maintains a check on the suction pressure at the pressure sensor T effected by the pump E, the pump discharge pressure by the high pressure switch F, and the electrical conductivity of the water by the sensor K. If the pressures are not within an acceptable range, or if the water conductivity exceeds 20uS/cm² for more than thirty seconds, an alarm signal will be raised. The system will only shut down, however, upon receipt of an unacceptably high conductivity level.

The reverse osmosis filter G preferably provides water quality better than 25uS/cm². The rated flow of permeate may be of substantially 100 l/hr at 0.5 barg. Clearly, other rated flows and pressures are possible.

Upon installation of the system, the regulating valves R and O are adjusted to obtain the correct flow rates through flowmeters H and P and the correct pressures on the meters U, V and T, in accordance with the rating required and settings given in an installation manual.

The control circuitry is provided with a user interface alphanumeric screen and an arrow keypad for setting the system up and subsequently for manually overriding the system for security and testing.

A more rapid availability is possible for processed water if a quality check by the sensor K is not carried out with the permeate flowing to drain 52, provided the reverse osmosis system is not shut down for more than thirty minutes. This does not involve a very high risk of contamination. If the sensor nonetheless detects too high a conductivity of the water, the reverse osmosis filter will be taken out of service, and an alarm signal generated.

## Claims

1. A humidification system comprising at least one steam humidifier unit (10, 12, 14) connected to a reverse osmosis unit (34) of the system so as to receive processed water therefrom when in use, comprising a control circuitry connected to a water-required signal generator (26) of the steam humidifier unit (10, 12, 14) to receive a signal therefrom indicative of the need for water to be fed to the steam humidifier unit (10, 12, 14), the control circuitry also being connected to the reverse osmosis unit (34) to issue a start-up signal upon receipt of such a water-required signal so as to cause the reverse osmosis unit (34) to start operating, the latter being provided with a readiness signal generator (T, U, V, H and P) connected to the control circuitry to send a readiness signal thereto once the reverse osmosis (34) unit has become ready to provide adequately processed water, the control circuitry also being connected to at least one feed valve (L) of the system to switch that valve (L) so as to cause the processed water from the reverse osmosis unit (34) to be fed to the humidifier unit (10, 12, 14) upon receipt of such a readiness signal.

2. A system according to claim 1, wherein the steam humidifier unit is provided with a fill-complete signal generator (60) constructed to issue a signal once the filling of the steam humidifier unit (10, 12, 14) with processed water is complete, the control circuitry being connected to the fill-complete signal generator (60) and constructed to issue a shut-down signal to the reverse osmosis unit (34) upon receipt of such a fill-complete signal.

3. A system according to claim 1 or claim 2, wherein the system comprises a plurality of steam humidifier units (10, 12, 14) each connected to the reverse osmosis unit (34) so as to receive processed water therefrom when in use, the reverse osmosis unit (34) being started up upon issue of a water-required signal from any one or more of the humidifier units (10, 12, 14).

4. A system according to claim 3, wherein the reverse osmosis unit (34) is shut down only when a fill-complete signal has been received from the or all the humidifier units which have last issued a water-required signal.

5. A system according to any preceding claim, wherein the steam humidifier unit (10, 12, 14) comprises a boiler tank (10), the said water-required signal generator (26) comprising a level sensor switch within the tank (10).

6. A system according to claim 5, wherein the level sensor switch is a float switch (26).

7. A system according to claim 5, wherein the level sensor switch is a pressure switch.

8. A method of humidification using apparatus as set out in one or more of the preceding claims.

## Patentansprüche

1. Ein Befeuchtungssystem mit mindestens einer Dampfbefeuchtungseinheit (10, 12, 14), die mit einer Umkehrosmoseeinheit (34) des Systems verbunden ist, um beim Betrieb mit aufbereiteten Wasser versorgt zu werden, mit einem Kontrollkreis der mit einem Wasserbedarf-Signalgenerator (26) der Dampfbefeuchtungseinheit (10, 12, 14) in Verbindung steht, um von diesem mit einem einen Wasserbedarf für letztere anzeigenden Signal beaufschlagt zu werden, wobei die Umkehrosmoseeinheit (34) ebenfalls mit dem Kontrollkreis verbunden ist, um nach Empfang des Wasserbedarf-Signales den Betrieb der Umkehrosmoseeinheit (34) einzuleiten, welch letztere mit einem Bereitschafts-Signalgenerator (T, U, V, H und P) versehen ist, der mit dem Kontrollkreis verbunden ist, um diesem ein Bereitschafts-Signal zuzuleiten, sobald die Umkehrosmoseeinheit (34) in der Lage ist, ausreichend aufbereitetes Wasser zu liefern, wobei der Kontrollkreis außerdem mit mindestens einem Speiseventil (L) des Systems verbunden ist, um dieses Ventil (L) zu betätigen, damit das aufbereitete Wasser von der Umkehrosmoseeinheit (34) nach Eingang des Bereitschafts-Signales zur Befeuchtungseinheit (10, 12, 14) befördert wird.

2. Ein System nach Anspruch 1, bei dem die Dampfbefeuchtungseinheit mit einem Füllungkomplett-Signalgenerator (60) versehen ist, der zur Abgabe eines Signales dient, sobald der Füllvorgang der Dampfbefeuchtungseinheit (10, 12, 14) mit aufbereitetem Wasser abgeschlossen ist, wobei der Kontrollkreis mit dem die komplette Füllung anzeigenden Signalgenerator (80) verbunden und so ausgebildet ist, daß er die Umkehrosmoseeinheit (34) nach Erhalt des Füllungkomplett-Signales mit einem Schließsignal beaufschlagt.

3. Ein System nach Anspruch 1 oder 2 mit mehreren Dampfbefeuchtungseinheiten (10, 12, 14), von denen eine jede mit der Umkehrosmoseeinheit (34) verbunden ist, um von dieser während des Betriebes mit aufbereitetem Wasser versorgt zu werden, wobei die Umkehrosmoseeinheit (34) ihren Betrieb aufnimmt, sobald sie das Wasserbedarf-Signal irgendeiner oder mehrerer Befeuchtungseinheiten (10, 12, 14) erhält.

4. Ein System nach Anspruch 3, im dem die Umkehrosmoseeinheit (34) nur dann abgeschaltet wird, wenn ein Signal von einer oder allen Befeuchtungseinheiten eingegangen ist, die als letzte ein Wasserbedarf-Signal abgegeben hat bzw. haben.

5. Ein System nach einem der vorangehenden Ansprüche, bei dem die Dampfbefeuchtungseinheit (10, 12, 14) einen Dampfkesseltank (10) aufweist, in dem der Wasserbedarfssignalgenerator (26) einen Wasserstandssensorschalter aufweist.

6. Ein System nach Anspruch 5, bei dem der Wasserstandssensorschalter als Schwimmerschalter (26) ausgebildet ist.

7. Ein System nach Anspruch 5, bei dem der Wasserstandssensorschalter als Druckschalter ausgebildet ist.

8. Ein Befeuchtungsverfahren, bei dem ein Apparat der in einem oder mehreren der vorangehenden Ansprüche beschriebenen Art Verwendung findet.

## Revendications

1. Un système d'humidification, comprenant au moins une unité humidificatrice à vapeur (10, 12, 14) reliée à une unité à osmose inverse (34) du système, de manière à recevoir de celle-ci de l'eau traitée lorsqu'il est en utilisation, comprenant un circuit de commande, relié à un générateur de signal de demande d'eau (26) de l'unité humidificatrice à vapeur (10, 12, 14), afin d'en recevoir un signal indicatif du besoin en eau devant être fourni à l'unité humidificatrice (10, 12, 14), le circuit de commande étant également connecté à l'unité à osmose inverse (34), pour envoyer un signal de démarrage, à réception d'un tel signal de besoin en eau, de manière à faire démarrer le fonctionnement de l'unité à osmose inverse (34), cette dernière étant munie d'un générateur de signal prêt (T, U, V, H et P) relié au circuit de commande, pour envoyer un signal prêt à celui-ci, une fois que l'unité à osmose inverse (34) est devenue prête à fournir de l'eau ayant été traitée de manière appropriée, le circuit de commande étant également relié à au moins une soupape d'alimentation (L) du système, pour faire commuter cette soupape (L), pour que l'eau traitée, venant de l'unité à osmose inverse (34), soit fournie à l'unité humidificatrice (10, 12, 14), à réception d'un tel signal prêt.

2. Un système selon la revendication 1, dans lequel l'unité humidificatrice à vapeur est munie d'un générateur de signal d'achèvement de remplissage (60), construit pour envoyer un signal, une fois que le remplissage de l'unité humidificatrice à vapeur (10, 12, 14) en eau traitée ait été achevé, le circuit de commande étant relié au générateur de signal de remplissage achevé (60) et construit pour envoyer un signal de mise à l'arrêt à l'unité à osmose inverse (34), à réception d'un tel signal d'achèvement de remplissage.

3. Un système selon la revendication 1 ou la revendication 2, dans lequel le système comprend une pluralité d'unités humidificatrices à vapeur (10, 12, 14), chacune reliée à l'unité à osmose inverse (34), pour en recevoir de l'eau traitée lorsqu'elle est en utilisation, l'unité à osmose inverse (34) étant démarrée à l'envoi d'un signal de besoin en eau provenant d'une ou plusieurs, quelconques, des unités humidificatrices (10, 12, 14).

4. Un système selon la revendication 3, dans lequel l'unité à osmose inverse (34) est stoppée, uniquement lorsqu'un signal d'achèvement de remplissage a été reçu de la ou toutes les unités humidificatrices ayant envoyé en dernier un signal de demande en eau.

5. Un système selon l'une quelconque des revendications précédentes, dans lequel l'unité humidificatrice à vapeur (10, 12, 14) comprend un réservoir de bouilleur (10), ledit générateur de signal de besoin en eau (26) comprenant un interrupteur de capteur de niveau, monté dans le réservoir (10).

6. Un système selon la revendication 5, dans lequel l'interrupteur de capteur de niveau est un interrupteur à flotteur (26).

7. Un système selon la revendication 5, dans lequel l'interrupteur de capteur de niveau est un interrupteur à pression.

8. Un procédé d'humidification, utilisant un dispositif tel qu'indiqué dans l'une ou plusieurs des revendications précédentes.
